# DEMANDE DE BREVET EUROPEEN

(11) **EP 2 514 389 A1**
(43) Date de publication de la demande: **24.10.2012**
(21) Numéro de dépôt: 12163572.6
(22) Date de dépôt: 10.04.2012
(51) Int. Cl.: A61C 7/28

(54) **Boîtier orthodontique auto-ligaturant**

(30) Priorité: 19.04.2011 FR 1153363
(71) Demandeur: O.C.S., 42110 Feurs (FR)
(72) Inventeur: Bacis, Pierre, 42360 Cottance (FR)
(74) Mandataire: Delorme, Nicolas

(57) **Abrégé**

L'invention concerne un boîtier orthodontique (1) auto-ligaturant comprenant :
- une base (6) présentant une face linguale (8; 208), et une face vestibulaire (10) opposée à la face linguale (8) ;
- une gorge (34) destinée à recevoir un arc orthodontique ;
- une ailette (12);
- un élément de ligature (4) monté sur l'ailette (12) ;

caractérisé en ce que :
- l'ailette (12) comprend un premier tronçon (12a), et un second tronçon (12b) prolongeant le premier tronçon (12a) en formant un coude ; et
- l'élément de ligature (4) est monté coulissant entre :
• une position d'ouverture, dans laquelle l'élément de ligature (4) ceint le second tronçon (12b) de l'ailette (12) ; et
• une position de fermeture, dans laquelle l'élément de ligature (4) ceint le premier tronçon (12a) de la première ailette (12), de manière à contraindre l'arc à l'intérieur de la gorge (34).

## Description

L'invention concerne un boîtier orthodontique auto-ligaturant, et un appareil orthodontique comprenant ce boîtier.

L'orthodontie est la branche de la médecine relative aux malpositions dentaires et à la thérapeutique corrective associée. Pour corriger une malposition dentaire, les praticiens ont généralement recours à des appareils orthodontiques.

Un appareil orthodontique est un système mécanique comprenant une pluralité de boîtiers (plus communément appelées « brackets ») collés aux dents dont il est souhaitable de corriger la position, et un arc orthodontique s'encastrant dans des gorges ménagées sur les boîtiers. L'arc est généralement formé par un fil métallique élastique. L'appareil orthodontique exerce une force sur les dents provoquant un déplacement progressif de chaque dent vers une position idéale. De la sorte, il est possible d'assurer une arcade dentaire régulière.

Deux types de boîtiers sont plus particulièrement utilisés. Les boîtiers pour lesquelles une ligature élastique ceint des ailettes et exerce une pression sur celles-ci dans le but de contraindre l'arc dans la gorge, et les boîtiers auto-ligaturants comprenant un clapet coulissant permettant d'introduire et en alternance, de retirer l'arc de la gorge, et de maintenir l'arc dans la gorge.

Un inconvénient des boîtiers à clapet est qu'ils possèdent une mécanique complexe sujette à l'entartrement. En outre, ceux-ci sont fragiles et peuvent se casser ou se tordre. Aussi, il est nécessaire de changer les boîtiers en cours de traitement, ou encore de traiter ces boîtiers avec de l'acide. Par ailleurs, ces boîtiers sont épais, d'où un risque accru de décollement par effet de cisaillement lors de la mastication de certains aliments.

Un inconvénient des boîtiers à ailettes présentés ci-avant est que les ligatures sont généralement en plastique élastomère. Ces ligatures sont fragiles et cassent fréquemment lors de leur pose. De plus, ces ligatures en élastomère favorisent le développement bactérien.

Enfin, la pose d'une ligature nécessite d'écarter la ligature, de ceindre les ailettes avec la ligature puis de relâcher la ligature. Dans la mesure où la ligature est de faible dimension, la pose de ces ligatures est fastidieuse pour un praticien.

L'invention vise à pallier ces inconvénients.

L'invention porte ainsi sur boîtier orthodontique auto-ligaturant comprenant :
- une base présentant une face linguale destinée à être fixée sur une surface dentaire, et une face vestibulaire opposée à la face linguale;
- une gorge débouchant sur la face vestibulaire destinée à recevoir un arc orthodontique ;
- une ailette adjacente à la gorge ;
- un élément de ligature monté sur l'ailette destiné à contraindre l'arc à l'intérieur de la gorge;
   **caractérisé en ce que** :
- l'ailette comprend un premier tronçon s'étendant depuis la face vestibulaire de la base, et un second tronçon prolongeant le premier tronçon en formant un coude ; et
- l'élément de ligature est engagé sur l'ailette et est monté coulissant entre :
   - une position d'ouverture, dans laquelle l'élément de ligature ceint le second tronçon de l'ailette, libérant un accès à la gorge pour disposer un arc à l'intérieur de cette gorge; et
   - une position de fermeture, dans laquelle l'élément de ligature ceint le premier tronçon de la première ailette, de manière à contraindre l'arc à l'intérieur de la gorge.

L'ensemble de l'invention est avantageux en ce qu'il suffit de déplacer l'élément de ligature de sa position ouverte à sa position fermée, en faisant coulisser celui-ci le long des premier et second tronçons, pour contraindre un arc à l'intérieur de la gorge. Ainsi, la pose d'un appareil orthodontique comprenant ce boîtier est rendue simple pour le praticien.

Par ailleurs, il n'est pas nécessaire que l'élément de ligature possède des propriétés d'élasticité. Il est possible d'utiliser un élément de ligature dans un matériau dont la résistance mécanique est supérieure à celle d'un élastomère et moins propice au développement bactérien.

Enfin, l'ensemble de l'invention présente un faible encombrement et possède une mécanique simple, peu sujette à l'entartrement.

L'ensemble de l'invention peut comporter les caractéristiques suivantes.

Dans une forme d'exécution préférée, le comprend une seconde ailette pourvue d'un renfoncement constituant la gorge pour recevoir un arc orthodontique.

Lorsque la gorge est ainsi formée, le maintien de l'arc au sein de la gorge est amélioré.

Avantageusement, les premier et second tronçons de la première ailette s'étendent majoritairement selon des plans.

Dans ces conditions, l'élément de ligature peut coulisser facilement sur les tronçons lors du déplacement de la position ouverte à la position fermée.

De préférence, l'angle formé par les plans selon lesquels s'étendent les premier et second tronçons est compris entre 40° et 110°.

Une telle conformation permet de faciliter une introduction de l'élément de ligature sur le second tronçon, et de limiter l'encombrement de la première ailette.

De préférence, le premier tronçon est cylindrique, et l'élément de ligature comprend un évidement cylindrique de section transversale sensiblement identique à la section transversale du premier tronçon.

Dans ces conditions, l'élément de ligature est retenu simplement par des forces de friction s'exerçant entre l'élément de ligature et le premier tronçon.

Avantageusement, le second tronçon est cylindrique, le plus grand diamètre de la section transversale de ce second tronçon étant moins large que le plus grand diamètre de la section transversale de l'évidement cylindrique de l'élément de ligature.

Une telle conformation du second tronçon permet de faciliter l'introduction de l'élément de ligature sur le second tronçon.

Un bossage peut être ménagé au niveau d'une extrémité occlusale du second tronçon, de manière à ce que lorsque l'élément de ligature est monté dans sa première position, le bossage empêche la chute de l'élément de ligature du second tronçon.

L'élément de ligature peut comprendre une première portion hémicylindrique tournée vers l'extérieur du coude et une seconde portion hémicylindrique tournée vers l'intérieur du coude, l'épaisseur de la première portion étant supérieure à l'épaisseur de la seconde portion, les épaisseurs étant mesurées dans des directions perpendiculaires aux droites génératrices de ces portions hémicylindriques.

Dans ces conditions, lors du déplacement de l'élément de ligature de la position d'ouverture vers la position de fermeture, et vice versa, le passage de la portion courbée du coude par l'élément de ligature est facilité.

Enfin, l'élément de ligature peut être réalisé dans un matériau de la famille des polymères polyaryléthercétones (PEAK).

L'élément de ligature possède alors une excellente résistance mécanique limitant les risques de casse lors de la pose. De plus, le développement bactérien est limité.

L'invention concerne également un appareil orthodontique, comprenant :
- un boîtier orthodontique présenté plus haut, et
- un arc conformé pour être encastré dans la gorge.

L'invention sera mieux comprise à la lecture de la description qui va suivre, donnée uniquement à titre d'exemple non limitatif et faite en se référant aux dessins sur lesquels :
- la figure 1 est une illustration en perspective d'un boîtier orthodontique pour un appareil orthodontique selon l'invention,
- la figure 2 est une illustration en vue de côté du boîtier de la figure 1, comprenant un élément de ligature en position d'ouverture,
- la figure 3 est une illustration en vue de côté du boîtier de la figure 1, comprenant un élément de ligature en position de fermeture,
- la figure 4 est une illustration en vue de dessus du boîtier de la figure 3,
- les figures 5 et 6 sont des illustrations en perspective d'un appareil orthodontique comprenant le boîtier de la figure 1,
- la figure 7 est une illustration en perspective d'une variante d'un boîtier de la figure 1, et
- la figure 8 est une illustration en vue de dessous du boîtier de la figure 7.

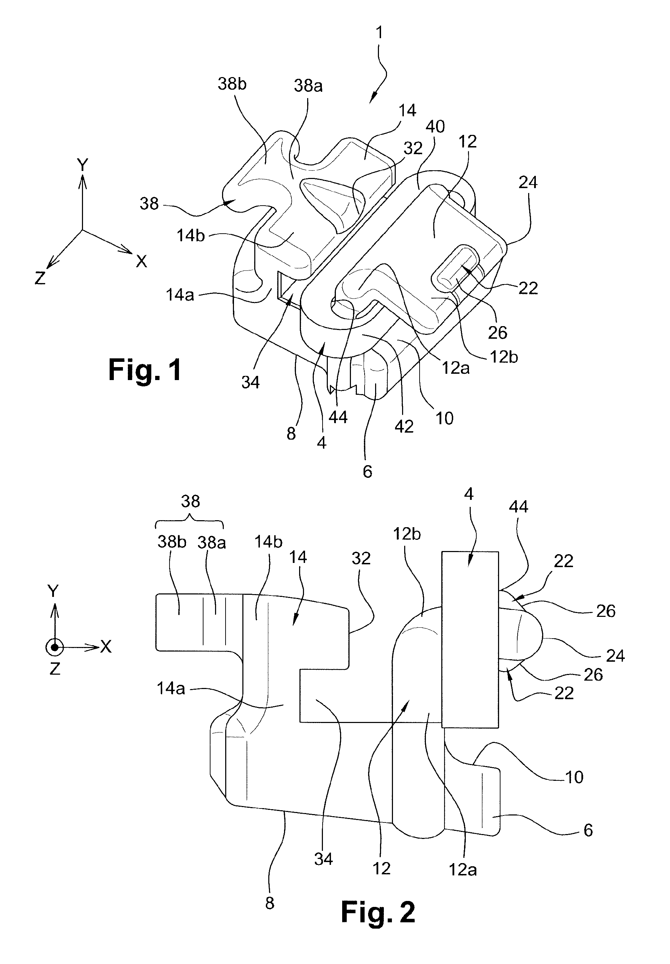

Les figures 1 à 8 sont orientées à l'aide d'un même référentiel orthogonal lié au boîtier et formé par des axes x, y et z.

La figure 1 illustre un boîtier 1 orthodontique auto-ligaturant selon l'invention.

Le boîtier 1 comprend une base 6. Cette base 6 présente une face linguale 8, et une face vestibulaire 10 opposée à la face linguale 8.

Le boîtier 1 comprend deux ailettes 12, et 14 s'étendant sur la face vestibulaire 10.

L'ailette 12 est formée de deux tronçons 12a et 12b. Une extrémité linguale du tronçon 12a est mécaniquement raccordée à la base 6. Le tronçon 12a est cylindrique. La section transversale du tronçon 12a est allongée, typiquement de forme oblongue ou rectangulaire. Le tronçon 12a s'étend majoritairement selon un plan parallèle aux axes y. et z. Ici, le tronçon 12a s'étend perpendiculairement à la face vestibulaire 10.

Le tronçon 12b est cylindrique. La section transversale du tronçon 12b est allongée, typiquement de forme oblongue ou rectangulaire. Ici, le plus grand diamètre de la section transversale du tronçon 12b est moins large que le plus grand diamètre du tronçon 12a. Les plus petits diamètres des sections transversales des tronçon 12a et 12b sont égaux.

Dans l'exemple, le tronçon 12b s'étend majoritairement selon un plan.

Le tronçon 12b s'étend dans le prolongement du tronçon 12a en formant un coude. Aussi, l'extrémité occlusale du tronçon 12a et l'extrémité linguale du tronçon 12b sont mécaniquement raccordées l'une à l'autre. Dans cette description, on entend par «formant un coude » la caractéristique selon laquelle les tronçons 12a et 12b forment un angle non nul. Dans l'exemple, cet angle est compris entre 40° et 110°.

Les tronçons 12a et 12b se prolongent avantageusement, sans former d'arrêtes saillantes à la jonction de ces tronçons 12a et 12b.

Des bossages 22 sont ménagés au niveau d'une extrémité occlusale 24 du tronçon 12b, de part et d'autre du tronçon 12b, de manière à ce que lorsqu'un élément de ligature 4 est monté sur ce tronçon 12b, les bossages 22 empêchent la chute de celui-ci.

Les bossages 22 comprennent des rampes 26 pour faciliter l'introduction de l'élément de ligature 4 sur le tronçon 12b. A cet effet, les faces des bossages 22 tournées vers l'extrémité occlusale 24 du tronçon 12b forment avec des faces extérieures du tronçon 12b un angle compris entre 25° et 75°, et de préférence égal à 45°.

L'ailette 14 comprend une extrémité linguale 14a et une extrémité occlusale 14b. L'extrémité linguale 14a est mécaniquement raccordée à la base 6. Comme illustrée, l'ailette 14 est un cylindre à base rectangulaire. L'ailette 14 s'étend majoritairement selon un plan parallèle aux axes y et z.

L'ailette 14 comprend un renfoncement constituant une gorge 34 pour recevoir un arc orthodontique. Dans l'exemple illustrée, la gorge 34 est disposée au niveau de l'extrémité linguale 14a, à l'intersection de l'ailette 14 et de la base 6. La gorge 34 s'étend sur toute la largeur de l'ailette 14. Ici, la gorge 34 possède une section transversale carrée et une section longitudinale rectangulaire.

Au niveau de l'extrémité occlusale 14b s'étend une excroissance 38 en porte à faux. Cette excroissance 38 est formée d'un corps 38a raccordé à l'extrémité occlusale 14b prolongé par une tête 38b plus large que le corps 38a. L'excroissance 38 permet de crocheter une chaînette élastomérique pour fermer des espaces interdentaires. Elle peut aussi permettre la mise en place d'une ligature élastomérique ou métallique pour contraindre l'arc dans la gorge si la position de la dent empêche la mise en place de l'élément de ligature.

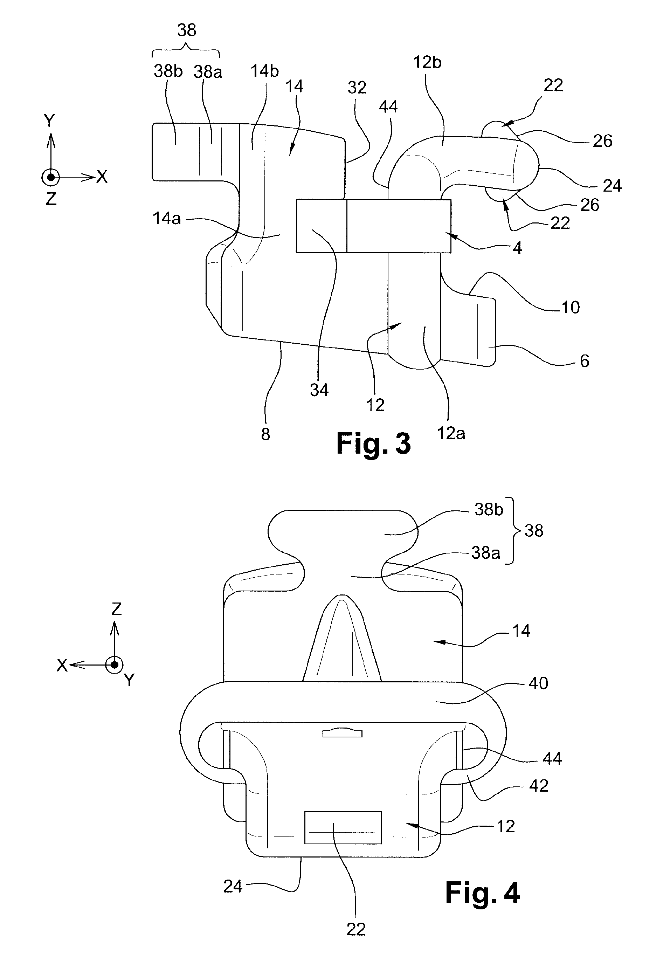

Le boîtier 1 est de préférence réalisé en oxyde de zirconium. L'élément de ligature 4 est un passant monté coulissant entre :
- une position d'ouverture (illustrée sur la figure 2), dans laquelle l'élément de ligature 4 ceint le tronçon 12b, libérant un accès à la gorge 34 pour disposer un arc à l'intérieur de cette gorge 34, et
- une position de fermeture (illustrée sur les figures 3 et 4), dans laquelle l'élément de ligature 4 ceint le tronçon 12a, de manière à contraindre l'arc à l'intérieur de la gorge 34.

Plus spécifiquement, l'élément de ligature 4 comprend deux portions hémicylindriques 40, et 42 (plus visibles sur la figure 4) délimitant un évidement 44. La portion 40 est tournée vers l'extérieur du coude. La portion 42 est tournée vers l'intérieur du coude. Par « extérieur du coude » on désigne le côté du coude tourné vers l'ailette 14. Par opposition, l'autre côté de ce coude constitue « l'intérieur du coude ».

Avantageusement, l'épaisseur de la portion 40 est supérieure à l'épaisseur de la portion 42, les épaisseurs étant mesurées dans des directions perpendiculaires à des droites génératrices des portions hémicylindriques 40, et 42. Dans ces conditions, le franchissement de la jonction entre les tronçons 12a et 12b par l'élément de ligature 4 est facilité.

La portion 40 est conformée de telle sorte que lorsque l'élément de ligature 4 est en position de fermeture, la face de la portion 40 tournée vers la face 32 est affleurante avec cette face 32.

Par ailleurs, la hauteur de l'élément de ligature 4, mesurée selon la droite génératrice de la portion 40, est de préférence, supérieure ou égale à la hauteur de la gorge 34, mesurée selon l'axe y.

L'évidement 44 est cylindrique de section transversale sensiblement identique à la section transversale du tronçon 12a. Dans ces conditions, lorsque l'élément de ligature 4 est en position de fermeture, l'élément de ligature 4 est retenue par des forces de friction s'exerçant entre l'élément de ligature 4 et le tronçon 12a.

Le plus grand diamètre de la section transversale de l'évidement 44 est plus large que le plus grand diamètre de la section transversale du tronçon 12b, de manière à faciliter l'introduction de l'élément de ligature 4 sur le tronçon 12b.

Enfin, l'élément de ligature 4 est de préférence de la famille des polymères polyaryléthercétones (PEAK). Par exemple, celui-ci est en polyétheréthercétone (PEEK).

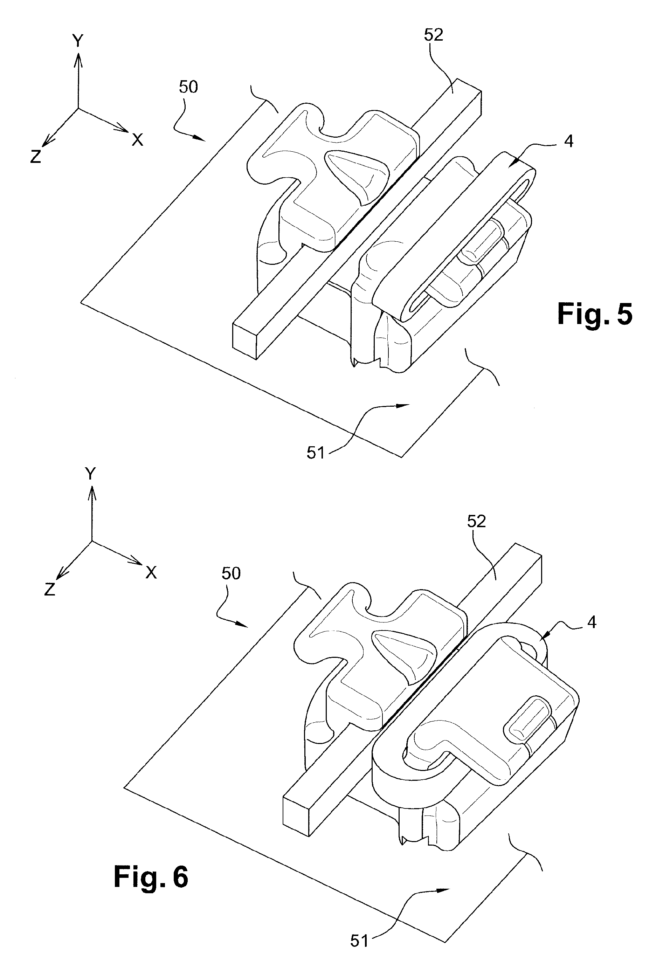

Un appareil orthodontique 50 est illustré sur les figures 5 et 6. Cet appareil 50 comprend le boîtier 1 disposé sur une dent 51. Plus particulièrement, la face linguale 8 du boîtier 1 est fixée sur la face vestibulaire de la dent 51.

L'appareil 50 comprend par ailleurs un arc orthodontique 52. L'arc 52 est encastré dans la gorge 34. A cet effet, l'arc 52 et la gorge 34 sont de formes complémentaires.

Un procédé de mise en oeuvre de l'appareil 50 va maintenant être décrit en référence aux figures 5 et 6.

Lors d'une première étape, l'élément de ligature 4 est monté en position d'ouverture (illustrée sur la figure 5) sur le tronçon 12b. A cet effet, un praticien introduit l'extrémité occlusale 24 du tronçon 12b à l'intérieur de l'évidement 44 de l'élément de ligature 4. Puis, le praticien fait coulisser l'élément de ligature 4 sur le tronçon 12b jusqu'à ce que celui-ci franchisse les bossages 22 et demeure en position d'ouverture.

Lors d'une seconde étape, le praticien colle la face 8 du boîtier 1 sur lequel est montée l'élément de ligature 4 contre la face vestibulaire d'une dent du patient.

Les première et deuxième étapes sont répétées de manière à ce qu'un boîtier 1 soit collé sur chacune des dents, dont il est souhaitable de corriger la position.

Lors d'une troisième étape l'arc orthodontique 52 est encastré dans les gorges 34 ménagées sur chacune des boîtiers collés.

Enfin lors d'une dernière étape, les éléments de ligatures 4 sont déplacés, par coulissement sur le tronçon 12a, dans leur position de fermeture (illustrée sur la figure 6). Dans cette position, ceux-ci contraignent l'arc 52 dans les gorges 34. Dans une variante, lors de la mise en oeuvre de l'appareil 50, lors de la première étape, le praticien colle la face 8 du boîtier 1 contre la face vestibulaire d'une dent du patient. Puis, lors de la seconde étape l'élément de ligature 4 est monté en position d'ouverture (illustrée sur la figure 5) sur le tronçon 12b.

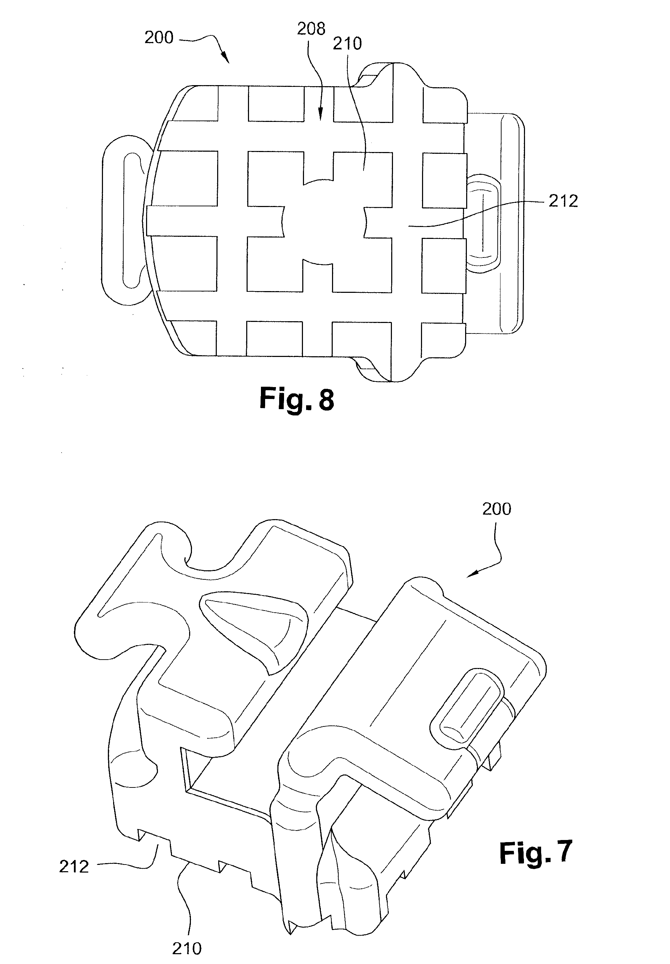

Les figures 7 et 8 illustrent un boîtier 200 identique au boîtier 1, à l'exception du fait que la face linguale 8 est remplacée par une face linguale 208. Cette face linguale 208 est conformée de telle sorte qu'elle comprend un ensemble de protuberances 210 délimittant entre elles des sillons 212 dans lesquels de la colle peut être disposée.

## Revendications

1. Boîtier orthodontique (1) auto-ligaturant comprenant :
- une base (6) présentant une face linguale (8; 208) destinée à être fixée sur une surface dentaire, et une face vestibulaire (10) opposée à la face linguale (8) ;
- une gorge (34) débouchant sur la face vestibulaire (10) destinée à recevoir un arc orthodontique ;
- une ailette (12) adjacente à la gorge (34) ;
- un élément de ligature (4) monté sur l'ailette (12) destiné à contraindre l'arc à l'intérieur de la gorge (34) ;
**caractérisé en ce que** :
- l'ailette (12) comprend un premier tronçon (12a) s'étendant depuis la face vestibulaire (10) de la base (6), et un second tronçon (12b) prolongeant le premier tronçon (12a) en formant un coude ; et
- l'élément de ligature (4) est engagé sur l'ailette (12) et est monté coulissant entre :
• une position d'ouverture, dans laquelle l'élément de ligature (4) ceint le second tronçon (12b) de l'ailette (12), libérant un accès à la gorge (34) pour disposer un arc à l'intérieur de cette gorge (34) ; et
• une position de fermeture, dans laquelle l'élément de ligature (4) ceint le premier tronçon (12a) de la première ailette (12), de manière à contraindre l'arc à l'intérieur de la gorge (34).

2. Boîtier orthodontique (1) selon l'une quelconque des revendications précédentes, dans lequel le comprend une seconde ailette (14) pourvue d'un renfoncement constituant la gorge (34) pour recevoir un arc orthodontique.

3. Boîtier orthodontique (1) selon l'une quelconque des revendications précédentes, dans lequel les premier et second tronçons (12a, 12b) de la première ailette (12) s'étendent majoritairement selon des plans.

4. Boîtier orthodontique (1) selon la revendication 3, dans lequel l'angle formé par les plans selon lesquels s'étendent les premier et second tronçons (12a, 12b) est compris entre 40° et 110°.

5. Boîtier orthodontique (1) selon l'une quelconque des revendications précédentes, dans lequel le premier tronçon (12a) est cylindrique, et l'élément de ligature (4) comprend un évidement (44) cylindrique de section transversale sensiblement identique à la section transversale du premier tronçon (12a).

6. Boîtier orthodontique (1) selon la revendication 5, dans lequel le second tronçon (12b) est cylindrique, le plus grand diamètre de la section transversale de ce second tronçon (12b) étant moins large que le plus grand diamètre de la section transversale de l'évidement (44) cylindrique de l'élément de ligature (4).

7. Boîtier orthodontique (1) selon l'une quelconque des revendications précédentes, dans lequel un bossage (22) est ménagé au niveau d'une extrémité occlusale (24) du second tronçon (12b), de manière à ce que lorsque l'élément de ligature (4) est monté dans sa première position, le bossage empêche la chute de l'élément de ligature (4) du second tronçon (12b).

8. Boîtier orthodontique (1) selon l'une quelconque des revendications précédentes, dans lequel l'élément de ligature (4) comprend une première portion (40) hémicylindrique tournée vers l'extérieur du coude et une seconde portion (42) hémicylindrique tournée vers l'intérieur du coude, l'épaisseur de la première portion (40) étant supérieure à l'épaisseur de la seconde portion (42), les épaisseurs étant mesurées dans des directions perpendiculaires aux droites génératrices de ces portions (40, 42) hémicylindriques.

9. Boîtier orthodontique (1) selon l'une quelconque des revendications précédentes, dans lequel l'élément de ligature (4) est réalisé dans un matériau de la famille des polymères polyaryléthercétones (PEAK).

10. Appareil orthodontique (50), comprenant :
- un boîtier orthodontique (1) selon l'une quelconque des revendications précédentes, et
- un arc (52) conformé pour être encastré dans la gorge (34).
